# FASCICULE DE BREVET EUROPEEN

(11) **EP 3 835 641 B1**
(45) Date de publication et mention de la délivrance du brevet: **26.03.2025**
(21) Numéro de dépôt: 20213367.4
(22) Date de dépôt: 11.12.2020
(51) Int. Cl.: F16L 53/34, F17D 1/00, H05B 6/10, E21B 36/00

(54) **INSTALLATION SOUS-MARINE DE CHAUFFAGE D'UN EFFLUENT DIPHASIQUE LIQUIDE/GAZ CIRCULANT À L'INTÉRIEUR D'UNE ENVELOPPE SOUS-MARINE**
UNTERWASSERANLAGE ZUM BEHEIZEN EINES IN EINEM UNTERWASSERGEHÄUSE ZIRKULIERENDEN ZWEIPHASIGEN FLÜSSIGKEITS-/GASAUSFLUSSES
UNDERWATER INSTALLATION FOR HEATING A TWO-PHASE LIQUID/GAS EFFLUENT CIRCULATING INSIDE AN UNDERWATER ENCLOSURE

(30) Priorité: 13.12.2019 FR 1914434
(43) Date de publication de la demande: 16.06.2021
(73) Titulaire: SAIPEM S.A, 78180 Montigny Le Bretonneux (FR)
(72) Inventeur: ANRES, Stéphane, 78210 SAINT CYR L'ECOLE (FR)
(74) Mandataire: Cabinet Beau de Loménie

(56) Documents cités:
- WO-A1-2016/066968
- WO-A1-2019/039960
- CN-U- 209 131 448
- JP-A- 2004 019 516

## Description

### Domaine Technique

La présente invention se rapporte au domaine général du chauffage des conduites métalliques de transport de fluides, et en particulier des conduites sous-marines reposant au fond de la mer et assurant une liaison entre des puits de production d'hydrocarbures sous-marins, notamment de pétrole et de gaz, et une installation de surface, par exemple une unité flottante de production, de stockage et de déchargement.

### Technique antérieure

Dans un même champ de production d'hydrocarbures offshore, il est courant d'exploiter plusieurs puits qui peuvent être séparés les uns des autres de plusieurs kilomètres, voire dizaines de kilomètres. Les effluents diphasiques (mélange liquide/gaz) issus de ces différents puits doivent être collectés par des conduites sous-marines posées au fond de la mer et transférés par des conduites de liaison fond/surface vers une installation de surface, par exemple un navire ou un point de collecte terrestre, qui va les recueillir pour les stocker (et éventuellement les traiter).

Par ailleurs, du fait de leur extraction à une grande profondeur dans le sous-sol, les effluents diphasiques issus des puits de production d'hydrocarbures sous-marins sortent à une température relativement élevée au niveau du fond de la mer (typiquement de l'ordre de 70°C). L'eau de mer étant généralement froide, surtout aux grandes profondeurs où elle est typiquement de 4°C, si aucune disposition n'est prise pour conserver la chaleur des effluents en sortie des puits de production, ceux-ci vont se refroidir progressivement en parcourant les kilomètres de conduites sous-marines. Or, ces effluents diphasiques contiennent divers composés chimiques pour lesquels un refroidissement fait apparaître des phénomènes gênants pour le maintien de bonnes conditions de circulation.

Ainsi, les molécules de gaz, notamment le méthane, se combinent aux molécules d'eau pour former, à basse température, des cristaux d'hydrates. Ces derniers peuvent coller aux parois, s'y agglomérer et conduire à la formation de bouchons capables de bloquer la conduite sous-marine. De même, la solubilité dans le pétrole des composés à haut poids moléculaires, comme les paraffines ou les asphaltènes, diminue lorsque la température baisse, ce qui donne naissance à des dépôts solides capables eux-aussi de bloquer la conduite sous-marine.

Une solution connue pour éviter la formation de bouchons dans les conduites sous-marines consiste à chauffer les conduites sous-marines sur toute leur longueur grâce à un ou plusieurs câbles électriques qui sont enroulés autour des conduites pour les chauffer par effet Joule. Cette solution qui est appelée « chauffage tracé » (ou « trace heating » en anglais) permet de maintenir les effluents diphasiques transportés dans les conduites sous-marines à une température supérieure à un seuil critique sur tout leur trajet depuis le puits de production jusqu'à l'installation de surface.

Cette solution présente d'évidents problèmes liés à l'installation de tels câbles électriques de chauffage sur toute la longueur des conduites sous-marines, avec les coûts importants que cela représente en termes d'installation et de maintenance. Par ailleurs, le chauffage tracé est basé sur la continuité de l'installation tout le long des conduites sous-marines. Or, si cette continuité venait à être rompue pour une raison ou une autre à un endroit des conduites, toute l'installation se trouverait hors service. Cette contrainte impose donc de considérer ce type de chauffage uniquement pour les phases dites de préservation des effluents transportés, et non pour les phases opérationnelles de fonctionnement.

On connaît de la publication WO 2016/066968 une station de chauffage locale qui peut être placée en plusieurs endroits le long des conduites sous-marines afin d'assurer un niveau de température des effluents transportés suffisant sur une très grande longueur de conduites. En pratique, chaque station de chauffage peut comprendre un nombre d'enroulements horizontaux de conduit qui est un multiple du nombre de phases du courant électrique d'alimentation, les enroulements de conduit étant chacun d'une section de conduit autour de laquelle est enroulé un solénoïde, les solénoïdes étant montés électriquement de manière à obtenir un montage polyphasé. Ce type d'architecture présente ainsi une grande facilité d'installation et une grande souplesse d'utilisation.

Le design de la station de chauffage locale doit permettre d'injecter des niveaux de puissance thermique très élevés en minimisant la longueur de conduite à chauffer et en respectant une température de conduite maximum (typiquement de l'ordre de 150°C). Or, bien qu'efficace, la solution de station de chauffage présentée dans la publication WO 2016/066968 nécessite de chauffer de très grandes longueurs de conduite, ce qui augmente considérablement le poids et les dimensions de la station de chauffage.

### Exposé de l'invention

La présente invention a donc pour objet principal de proposer une installation de chauffage qui ne présente pas les inconvénients précités.

Conformément à l'invention, ce but est atteint grâce à une installation sous-marine de chauffage d'un effluent diphasique liquide/gaz circulant à l'intérieur d'une enveloppe sous-marine selon les caractéristiques de la revendication indépendante 1.

L'installation de chauffage selon l'invention est remarquable en ce que les sections de conduite chauffées sont inclinées par rapport à l'horizontale. Par « l'horizontale », on entend ici toute direction perpendiculaire à la direction de la pesanteur. Cette inclinaison permet de favoriser un régime d'écoulement distribué de l'effluent diphasique circulant dans l'installation. Un écoulement dit « distribué » (et en particulier un écoulement à bouchons) se caractérise par une structure présentant une succession de poches de gaz et de bouchons de liquide qui contiennent de petites bulles. Ce type d'écoulement s'oppose à un écoulement dit « stratifié » qui est obtenu par un écoulement d'effluent diphasique circulant dans des sections de conduite horizontales et dont l'interface liquide/gaz se présente sous la forme d'une surface continue séparant les deux phases (le liquide est situé en-dessous du gaz sous l'effet de la gravité). Or, il a été constaté qu'un régime d'écoulement distribué permet d'augmenter le coefficient d'échange thermique entre la section de conduite et l'effluent diphasique (notamment par rapport à un écoulement stratifié qui est inhomogène et préjudiciable au coefficient d'échange thermique). L'inclinaison des sections de conduite chauffées permet ainsi d'obtenir un régime d'écoulement distribué et d'améliorer significativement le coefficient d'échange thermique et donc de favoriser le transfert de puissances thermiques très élevées. De la sorte, pour les mêmes niveaux de puissance injectée, il est possible de réduire très fortement la longueur des sections de conduite chauffées, et donc de réduire l'encombrement et le poids de l'installation de chauffage.

Il est à noter que favoriser un régime d'écoulement distribué à l'intérieur de l'enveloppe sous-marine va complètement à l'encontre des préjugés de l'homme du métier qui a au contraire tendance à favoriser des régimes d'écoulement stratifiés. En effet, les régimes d'écoulement distribués ont l'inconvénient de générer (au moins pour une gamme de débits) des bouchons liquides à l'intérieur des sections de conduite qui sollicitent la conduite en vibrations, en particulier au niveau des pièces de raccordement et de plus génèrent des pertes de charge plus élevées.

Le serpentin de chauffage peut comprendre au moins six sections de conduite rectilignes reliées les unes aux autres par au moins cinq sections de conduite courbes, une entrée destinée à être raccordée à l'enveloppe sous-marine et une sortie, l'entrée et la sortie étant de préférence décalées verticalement l'une de l'autre.

Les sections de conduite chauffées sont de préférence sensiblement rectilignes. De préférence également, chaque section de conduite chauffée du serpentin de chauffage est inclinée par rapport à l'horizontale d'un angle de 5°.

Les sections de conduite chauffées du serpentin de chauffage peuvent chacune être ascendantes pour l'effluent, et les sections de conduite courbes sont chacune descendantes pour l'effluent.

De préférence encore, au moins l'une des sections de conduite courbes est munie d'un système de chauffage par induction (même si l'écoulement dans ces sections de conduite courbes peut être moins distribué que pour les sections de conduite chauffées).

Le système de chauffage de chaque section de conduite chauffée du serpentin de chauffage peut comprendre au moins une bobine d'induction disposée autour de la section de conduite chauffée sur au moins une portion de sa longueur et alimentée par un courant électrique de façon à générer un courant induit dans la section de conduite chauffée apte à provoquer un échauffement de celle-ci.

Les bobines d'induction du système de chauffage peuvent posséder une puissance électrique comprise entre 1 et 100kW par mètre de conduite bobinée.

Les sections de conduite chauffées peuvent avantageusement être recouvertes d'une couche d'isolant thermique autour de laquelle sont embobinées les bobines d'induction.

### Brève description des dessins

[Fig. 1] La figure 1 est une vue schématique de côté d'une installation sous-marine de chauffage selon un mode de réalisation de l'invention.
[Fig. 2] La figure 2 est une vue de dessus de l'installation de la figure 1.
[Fig. 3] La figure 3 est une vue schématique de côté d'une installation sous-marine de chauffage selon un autre mode de réalisation de l'invention.

### Description des modes de réalisation

L'invention s'applique à tout réseau de conduites sous-marines à simple ou multiple enveloppe(s) assurant une liaison entre au moins un puits de production d'hydrocarbures sous-marin et une installation de surface.

Un tel réseau de conduites sous-marines a pour but de transporter les effluents d'hydrocarbures (mélange diphasique de pétrole et de gaz) provenant d'un ou plusieurs puits de production sous-marins pour les acheminer vers une installation de surface, par exemple une unité flottante de production, de stockage et de déchargement (également appelée FPSO pour « Floating Production Storage and Offloading » en anglais).

Ces réseaux comprennent généralement plusieurs conduites sous-marines à simple ou multiple enveloppe(s) qui sont posées sur le fond marin et dans lesquelles circulent les effluents diphasiques provenant des puits de production.

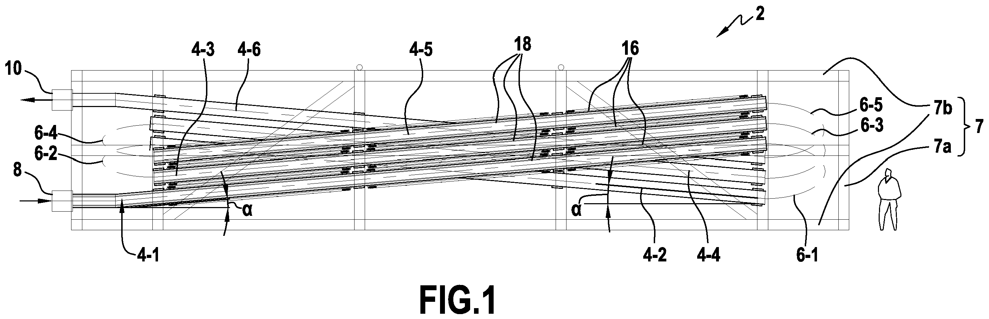

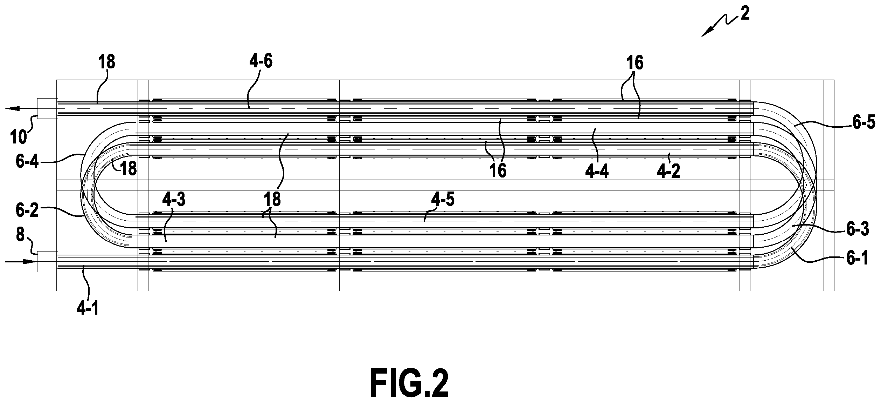

Pour maintenir les effluents transportés dans ces conduites sous-marines à une température supérieure à un seuil critique permettant d'éviter la formation de dépôts à l'intérieur desdites conduites, l'invention prévoit de raccorder les conduites à une ou plusieurs installations sous-marines de chauffage amovibles telles que celle représentée sur les figures 1 et 2.

L'installation de chauffage 2 représentée sur ces figures est raccordée de manière amovible à une conduite sous-marine à simple enveloppe (non représentée). Elle est commandée depuis l'installation en surface (non représentée sur la figure) en fonction notamment du mode de fonctionnement du réseau (typiquement : phase de fonctionnement normal, phase de préservation ou phase de redémarrage de la production).

De façon générale, l'installation de chauffage 2 selon l'invention comprend une pluralité de sections de conduite chauffées 4 qui sont raccordées successivement les unes aux autres par des sections de conduite courbes 6 de sorte à former un unique serpentin de chauffage, les sections de conduite chauffées 4 étant typiquement réalisées dans un métal conducteur tel que l'acier. Les sections de conduite 4, 6 formant le serpentin de chauffage sont montées sur un cadre 7 formé d'un assemblage de tubes verticaux 7a et de tubes horizontaux 7b.

Plus précisément, sur l'exemple de réalisation des figures 1 et 2, l'installation de chauffage 2 comprend une entrée 8 qui est destinée à être raccordée à la conduite sous-marine à simple enveloppe et qui débouche dans une première section de conduite chauffée 4-1.

Cette dernière débouche (à l'extrémité opposée à l'entrée 8) dans une première section de conduite courbe 6-1 qui elle-même débouche à une extrémité d'une deuxième section de conduite chauffée 4-2 cheminant dans le sens inverse de la première.

Le circuit se répète selon ce même schéma de façon à former un serpentin de chauffage comprenant ici six sections de conduite chauffées 4-1 à 4-6 qui sont reliées les unes aux autres par cinq sections de conduite courbes 6-1 à 6-5, une entrée 8 et une sortie 10, l'entrée et la sortie étant décalées verticalement et horizontalement l'une de l'autre.

On notera que dans ce mode de réalisation, les sections de conduite chauffées 4-1 à 4-6 sont rectilignes. Bien entendu, elles pourraient être courbes.

Toujours selon l'invention, les sections de conduite chauffées 4-1 à 4-6 sont chacune inclinée par rapport à l'horizontale (ou par rapport aux tubes horizontaux 7b du cadre 7) d'un même angle α qui est compris entre 2 et 10°, et qui est de préférence égal à 5°.

De préférence, les sections de conduite chauffées 4-1 à 4-6 sont chacune ascendantes dans le sens d'écoulement de l'effluent, et les sections de conduite courbes 6-1 à 6-5 sont chacune descendantes dans le sens d'écoulement de l'effluent.

Ainsi, avec une telle disposition, comme représenté sur la figure 2, les sections de conduite chauffées 4-1, 4-3 et 4-5 sont parallèles entre elles, de même que les sections de conduite chauffées 4-2, 4-4 et 4-6.

L'inclinaison des sections de conduite chauffées permet de favoriser un régime d'écoulement dit « distribué », et plus particulièrement un écoulement à bouchons, de l'effluent diphasique circulant dans l'installation.

Un écoulement distribué possède une structure qui présente une succession de poches de gaz et de bouchons de liquide contenant de petites bulles. Ce type d'écoulement s'oppose à un écoulement dit « stratifié » qui est obtenu par un écoulement d'effluent diphasique circulant dans des sections de conduite horizontales et dont l'interface liquide/gaz se présente sous la forme d'une surface continue séparant les deux phases (le liquide est situé en-dessous du gaz sous l'effet de la gravité).

Toujours selon l'invention, au moins les sections de conduite chauffées 4-1 à 4-6 sont chacune munie d'un système de chauffage par induction.

Typiquement, le système de chauffage de chaque section de conduite chauffée comprend au moins une bobine d'induction 16 (ou solénoïde) qui est disposée autour de la section de conduite chauffée 4-1 à 4-6 sur au moins une portion de sa longueur.

Ces bobines d'induction 16 sont alimentées depuis l'installation en surface en courant électrique triphasé. Comme les sections de conduite chauffées sont en acier, l'alimentation des bobines d'induction génèrent un courant induit dans celles-ci ce qui provoque leur échauffement. La chaleur est ensuite transmise par les sections de conduite chauffées au fluide diphasique en circulation par convection.

A titre d'exemple, pour faire monter la température extérieure des sections de conduite chauffées, les bobines d'induction du système de chauffage possèdent une puissance électrique comprise entre 1 et 100kW par mètre de conduite bobinée.

On notera que les sections de conduite chauffées 4-1 à 4-6, ainsi que les sections de conduite courbes 6-1 à 6-5, peuvent être recouvertes d'une couche d'isolant thermique 18. Dans ce cas, les bobines d'induction 16 sont embobinées autour de cette couche d'isolant thermique.

Un tel agencement de l'installation sous-marine de chauffage avec des sections de conduite chauffées inclinées par rapport à l'horizontale permet d'améliorer de façon significative le transfert thermique entre la face interne des sections de conduite chauffées et l'effluent diphasique en circulation.

A titre d'exemple, par rapport à une installation sous-marine de chauffage horizontale (telle que celle décrite dans la publication WO 2016/066968), il est possible, à puissance électrique égale, de raccourcir la longueur des sections de conduite chauffées de plus de 40%.

On notera que sur le mode de réalisation des figures 1 et 2, seules les sections de conduite chauffées 4-1 à 4-6 sont munies d'un système de chauffage par induction. Bien entendu, les sections de conduite courbes pourraient également être chauffées.

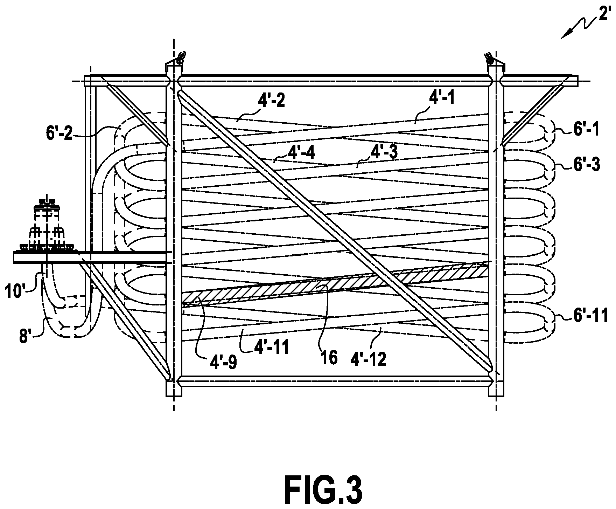

En liaison avec la figure 3, on décrira maintenant une installation sous-marine de chauffage 2' selon un autre mode de réalisation de l'invention.

Ce mode de réalisation se distingue de celui précédemment décrit notamment par son architecture de serpentin de chauffage qui comprend douze sections de conduite chauffées rectilignes 4'-1 à 4'-12 qui sont raccordées successivement les unes aux autres par onze sections de conduite courbes 6'-1 à 6'-11. Les sections de conduite chauffées 4'-1 à 4'-12 sont chacune munies d'un système de chauffage par induction (sur la figure 3, pour des raisons de commodité, seule la section de conduite 4'-9 est représentée avec une bobine d'induction 16).

Par ailleurs, toujours dans ce mode de réalisation, l'entrée 8' et la sortie 10' sont alignées verticalement et décalées horizontalement l'une de l'autre.

## Revendications

1. Installation sous-marine de chauffage (2 ; 2') pour un effluent diphasique liquide/gaz circulant à l'intérieur d'une enveloppe sous-marine, comprenant une pluralité de sections de conduite chauffées (4-1 à 4-6 ; 4'-1 à 4'-12) qui sont raccordées successivement les unes aux autres par des sections de conduite courbes (6-1 à 6-5 ; 6'-1 à 6'-11) pour former un serpentin de chauffage, chaque section de conduite chauffée étant inclinée par rapport à l'horizontale d'un angle (α) compris entre 2 et 10° afin de favoriser un régime d'écoulement distribué de l'effluent diphasique et étant munie d'un système de chauffage par induction (16), l'installation de chauffage comprenant également un cadre (7), le serpentin de chauffage étant monté sur le cadre (7), qui est formé par un assemblage de tubes verticaux (7a) et horizontaux (7b), chaque section de conduite chauffée étant inclinée par rapport aux tubes horizontaux (7b) du cadre (7) de l'angle (α) compris entre 2 et 10°.

2. Installation selon la revendication 1, dans laquelle le serpentin de chauffage comprend une entrée (8 ; 8') destinée à être raccordée à l'enveloppe sous-marine et débouchant dans une section de conduite chauffée qui est ascendante pour l'effluent circulant à l'intérieur.

3. Installation selon l'une des revendications 1 et 2, dans laquelle les sections de conduite chauffées sont sensiblement rectilignes.

4. Installation selon l'une quelconque des revendications 1 à 3, dans laquelle les sections de conduite chauffées du serpentin de chauffage sont chacune ascendantes pour l'effluent, et les sections de conduite courbes sont chacune descendantes pour l'effluent.

5. Installation (2) selon l'une quelconque des revendications 1 à 4, dans laquelle le serpentin de chauffage comprend au moins six sections de conduite rectilignes (4-1 à 4-6) reliées les unes aux autres par au moins cinq sections de conduite courbes (6-1 à 6-5), une entrée (8) destinée à être raccordée à l'enveloppe sous-marine et une sortie (10), l'entrée et la sortie étant de préférence décalées verticalement l'une de l'autre.

6. Installation selon l'une quelconque des revendications 1 à 5, dans laquelle chaque section de conduite chauffée du serpentin de chauffage est inclinée par rapport à l'horizontale d'un angle (α) de 5°.

7. Installation selon l'une quelconque des revendications 1 à 6, dans laquelle au moins l'une des sections de conduite courbes est munie d'un système de chauffage par induction.

8. Installation selon l'une quelconque des revendications 1 à 7, dans laquelle le système de chauffage de chaque section de conduite chauffée du serpentin de chauffage comprend au moins une bobine d'induction (16) disposée autour de la section de conduite chauffée sur au moins une portion de sa longueur et alimentée par un courant électrique de façon à générer un courant induit dans la section de conduite chauffée apte à provoquer un échauffement de celle-ci.

9. Installation selon la revendication 8, dans laquelle les bobines d'induction du système de chauffage possèdent une puissance électrique comprise entre 1 et 100kW par mètre de conduite bobinée.

10. Installation selon l'une des revendications 8 et 9, dans laquelle les sections de conduite chauffées sont recouvertes d'une couche d'isolant thermique (18) autour de laquelle sont embobinées les bobines d'induction (16). 1

## Patentansprüche

1. Unterwasserheizanlage (2; 2') für einen zweiphasigen Flüssigkeits-/Gasabfluss, der innerhalb einer Unterwasserhülle zirkuliert, umfassend eine Vielzahl von beheizten Leitungsabschnitten (4-1 bis 4-6; 4'-1 bis 4'-12), die nacheinander durch gebogene Leitungsabschnitte (6-1 bis 6-5; 6'-1 bis 6'-11) miteinander verbunden sind, um eine Heizschlange zu bilden, wobei jeder beheizte Leitungsabschnitt in Bezug auf die Horizontale um einen Winkel (α) zwischen 2 und 10° geneigt ist, um ein verteiltes Strömungsregime des zweiphasigen Abflusses zu begünstigen, und mit einem Induktionsheizsystem (16) versehen ist, die Heizanlage auch umfassend einen Rahmen (7), wobei die Heizschlange an dem Rahmen (7) montiert ist, der durch eine Anordnung von vertikalen (7a) und horizontalen (7b) Rohren gebildet ist, wobei jeder beheizte Leitungsabschnitt in Bezug auf die horizontalen Rohre (7b) des Rahmens (7) um den Winkel (α) zwischen 2 und 10° geneigt ist.

2. Anlage nach Anspruch 1, wobei die Heizschlange einen Einlass (8; 8') umfasst, der dazu bestimmt ist, mit der Unterwasserhülle verbunden zu werden und der in einen beheizten Leitungsabschnitt mündet, der für den darin zirkulierenden Abfluss ansteigend ist.

3. Anlage nach einem der Ansprüche 1 oder 2, wobei die beheizten Leitungsabschnitte im Wesentlichen geradlinig sind.

4. Anlage nach einem der Ansprüche 1 bis 3, wobei die beheizten Leitungsabschnitte der Heizschlange für den Abfluss jeweils aufsteigend und die gebogenen Leitungsabschnitte für den Abfluss jeweils absteigend sind.

5. Anlage (2) nach einem der Ansprüche 1 bis 4, wobei die Heizschlange mindestens sechs geradlinige Leitungsabschnitte (4-1 bis 4-6), die durch mindestens fünf gebogene Leitungsabschnitte (6-1 bis 6-5) miteinander verbunden sind, einen Einlass (8), der dazu bestimmt ist, mit der Unterwasserhülle verbunden zu werden, und einen Auslass (10) umfasst, wobei der Einlass und der Auslass vorzugsweise vertikal zueinander versetzt sind.

6. Anlage nach einem der Ansprüche 1 bis 5, wobei jeder beheizte Leitungsabschnitt der Heizschlange in Bezug auf die Horizontale um einen Winkel (α) von 5° geneigt ist.

7. Anlage nach einem der Ansprüche 1 bis 6, wobei mindestens einer der gebogenen Leitungsabschnitte mit einem Induktionsheizsystem versehen ist.

8. Anlage nach einem der Ansprüche 1 bis 7, wobei das Heizsystem von jedem beheizten Leitungsabschnitt der Heizschlange mindestens eine Induktionsspule (16) umfasst, die um den beheizten Leitungsabschnitt über mindestens einen Teil seiner Länge angeordnet ist und mit einem elektrischen Strom versorgt wird, um einen induzierten Strom in dem beheizten Leitungsabschnitt zu erzeugen, der geeignet ist, um dessen Erwärmung zu bewirken.

9. Anlage nach Anspruch 8, wobei die Induktionsspulen des Heizsystems eine elektrische Leistung zwischen 1 und 100 kW pro Meter gewickelter Leitung besitzen.

10. Anlage nach einem der Ansprüche 8 oder 9, wobei die beheizten Leitungsabschnitte mit einer Wärmeisolierungsschicht (18) bedeckt sind, um die die Induktionsspulen (16) gewickelt sind.

## Claims

1. A subsea installation for heating (2; 2') for a two-phase liquid/gas effluent circulating inside a subsea casing, comprising a plurality of heated pipe sections (4-1 to 4-6; 4'-1 to 4'-12) which are connected successively to one another by curved pipe sections (6-1 to 6-5; 6'-1 to 6'-11) to form a heating coil, each heated pipe section being inclined with respect to the horizontal at an angle (α) comprised between 2 and 10° to promote a distributed flow regime of the two-phase effluent and being provided with an induction heating system (16), the heating installation comprising a frame (7), the heating coil being assembled on the frame (7) which is formed by an assembly of vertical (7a) and horizontal (7b) tubes, each section of heated pipe being inclined relative to the horizontal tubes (7b) of the frame (7) by the angle (α) comprised between 2 and 10°.

2. The installation according to claim 1, wherein the heating coil comprises an inlet (8; 8') for connection to the subsea casing and opening into a heated pipe section which is ascending for the effluent flowing therein.

3. The installation according to claim 1 or claim 2, wherein the heated pipe sections are substantially straight.

4. The installation according to any one of claims 1 to 3, wherein the heated pipe sections of the heating coil are each ascending for the effluent, and the curved pipe sections are each descending for the effluent.

5. The installation (2) according to any one of claims 1 to 4, wherein the heating coil comprises at least six straight pipe sections (4-1 to 4-6) connected to each other by at least five curved pipe sections (6-1 to 6-5), an inlet (8) for connection to the subsea jacket and an outlet (10), the inlet and the outlet preferably being vertically offset from each other.

6. The installation as claimed in according to any one of claims 1 to 5, wherein each heated pipe section of the heating coil is inclined with respect to the horizontal at an angle (a) of 5°.

7. The installation according to any one of claims 1 to 6, wherein at least one of the curved pipe sections is provided with an induction heating system.

8. The installation according to any one of claims 1 to 7, wherein the heating system of each heated pipe section of the heating coil comprises at least one induction coil (16) disposed around the heated pipe section over at least a portion of its length and powered by an electric current so as to generate an induced current in the heated pipe section capable of causing heating thereof.

9. The installation according to claim 8, wherein the induction coils of the heating system have an electrical power comprised between 1 and 100 kW per meter of wound pipe.

10. The installation according to claim 8 or claim 9, wherein the heated pipe sections are covered with a layer of thermal insulation (18) around which the induction coils (16) are wound.
